# EUROPÄISCHE PATENTSCHRIFT

(11) **EP 3 239 517 B1**
(45) Veröffentlichungstag und Bekanntmachung des Hinweises auf die Patenterteilung: **13.03.2019**
(21) Anmeldenummer: 17156372.9
(22) Anmeldetag: 12.12.2011
(51) Int. Cl.: F02N 11/08, H02J 7/14, B60R 16/03

(54) **VORRICHTUNG ZUR STEUERUNG EINES STROMFLUSSES IN EINEM BORDNETZ EINES FAHRZEUGS**
DEVICE FOR CONTROLLING A CURRENT FLOW IN AN ON-BOARD SUPPLY SYSTEM OF A VEHICLE
DISPOSITIF DE COMMANDE D'UNE CIRCULATION DE COURANT DANS UN RÉSEAU DE DISTRIBUTION DE BORD D'UN VÉHICULE

(30) Priorität: 20.12.2010 DE 102010063598
(43) Veröffentlichungstag der Anmeldung: 01.11.2017
(62) Teilanmeldung aus: 11794169.0
(73) Patentinhaber: Continental Automotive GmbH, 30165 Hannover (DE)
(72) Erfinder: Reichow, Dirk, 93173 Wenzenbach (DE); Steckermeier, Tobias, 93186 Pettendorf (DE); Galli, Tobias, 93055 Regensburg (DE)

(56) Entgegenhaltungen:
- EP-A1- 2 154 359
- DE-A1- 10 305 357
- DE-A1-102005 039 362
- DE-A1-102006 037 699
- DE-A1-102008 054 720
- DE-A1-102009 024 374

## Beschreibung

### Technisches Gebiet:

Die Erfindung betrifft eine Vorrichtung zur Steuerung eines Stromflusses in einem Bordnetz eines Fahrzeugs. Ferner betrifft die Erfindung ein Fahrzeug, insb. ein Kraftfahrzeug mit einer oben genannten Vorrichtung.

### Stand der Technik und Aufgabe der Erfindung:

Bordnetze heutiger Kraftfahrzeuge umfassen einen als Drehstrommaschine mit nachgeschalteter Gleichrichterschaltung ausgebildeten Generator als Energiewandler, eine oder mehrere Energiespeichereinheiten, bspw. Batterien sowie über das Bordnetz zu versorgende elektrische Verbraucher, welche zusammengefasst Systemlast genannt werden. Die Drehstrommaschine, eine oder mehrere Energiespeichereinheiten, sowie die elektrischen Verbraucher werden zusammengefasst als erstes Energiesystem bezeichnet.

Ferner umfassen die Bordnetze weitere Energiespeichereinheiten, wie z. B. Doppelschichtkondensatoren, welche zusammengefasst zweites Energiesystem bezeichnet werden.

Die zwei Energiesysteme weisen unterschiedliche Nominalspannungen als Systemspannungen auf und sind zueinander potentialgetrennt aber auch potentialgebunden ausgeführt.

Das erste Energiesystem mit bspw. einer oder mehreren 12V-Batterien als Energiespeicher dient als Energie- bzw. Stromquelle für die Normalverbraucher des Kraftfahrzeugs wie z. B. Lampen.

Das zweite Energiesystem, bspw. bestehend aus Doppelschichtkondensatoren (Ultra-Caps) dient als Energie- bzw. Stromquelle für die für Hochstromverbraucher wie z. B. Motorstarter.

Die Steuerung des Stromflusses zwischen diesen beiden Energiesystemen wird von einer Vorrichtung bewirkt, wobei diese Vorrichtung von einem Energiespeicher also Stromquelle eines der beiden Energiesysteme (in der Regel von der 12V-Batterie des ersten Energiesystems) mit einer Betriebsspannung versorgt wird. Die Druckschrift DE 103 05 357 A1 beschreibt ein Bordnetz eines Fahrzeugs mit einem Stromverbraucher, einem ersten und einem zweiten Energiespeicher, wobei der Stromverbraucher über einen ersten und einen zweiten Schalter wahlweise mit dem ersten oder dem zweiten Energiespeicher elektrisch verbindbar und somit von einem der beiden Energiespeicher wahlweise mit Strom versorgbar ausgeführt ist.

Die Druckschrift DE 10 2005 039362 A1 beschreibt ein Fahrzeug-Energieversorgungssystem mit einem ersten und einem zweiten steuerbaren Schalter sowie einem Systemsteuer, wobei der Systemsteuer den ersten und den zweiten Schalter abhängig von dem Zustand des Energieversorgungssystems gesteuert schließt oder öffnet.

Die Druckschrift DE 10 2005 039362 A1 beschreibt eine Vorrichtung zur Steuerung eines Stromflusses in einem Bordnetz, mit folgenden Merkmalen:- einem ersten, einem zweiten und einem dritten elektrischen Anschluss,- einem ersten, zwischen dem ersten und dem zweiten Anschluss angeordneten, mit einer ersten, an einem vierten Anschluss der Vorrichtung anliegenden Steuerspannung steuerbaren, selbstsperrenden Schalter, wobei in einem geschlossenen Zustand des ersten Schalters der erste Anschluss mit dem zweiten Anschluss elektrisch verbindbar ist,- einem zweiten, zwischen dem ersten und dem dritten Anschluss angeordneten, mit einer zweiten Steuerspannung steuerbaren Schalter, wobei in einem geschlossenen Zustand des zweiten Schalters der erste Anschluss mit dem dritten Anschluss elektrisch verbindbar ist,- einer Steuereinrichtung zum Schließen des ersten Schalters bzw. zum Halten des ersten Schalters im geschlossenen Zustand, wenn die am vierten Anschluss der Vorrichtung anliegende Steuerspannung unter einen zum Schließen bzw. zum Halten des ersten Schalters im geschlossenen Zustand minimal erforderlichen Spannungsschwellwert fällt,- wobei der erste Schalter in dem durch die Steuereinrichtung gesteuert geschlossenen Zustand den ersten Anschluss mit dem zweiten Anschluss elektrisch verbindet insb. elektrisch kurzschließt und so einen potentiellen parasitären Stromfluss vom ersten Anschluss über den geöffneten zweiten Schalter zum dritten Anschluss verhindert.

In einem Bordnetz ist es sehr wichtig, einen weitgehend sicheren Systemzustand (Safe-State) in einem nominalen aber auch in einem nicht nominalen Betriebsfall des Bordnetzes zu erhalten.

Eine der Anforderungen bei der Einhaltung eines sicheren Systemzustandes beim Eintreten eines Systemfehlers im Bordnetz, insb. im ersten Energiesystem, welcher zu einem drastischen Spannungsabfall im ersten und/oder im zweiten Energiesystem führt, ist das Halten des elektrisch geschlossenen Strompfads im ersten Energiesystem, um eine unerwünschte parasitäre Strominjektion von dem ersten Energiesystem zum zweiten Energiesystem zu vermeiden, welche (die unerwünschte parasitäre Strominjektion) einerseits zu einem unkontrollierten Überladen des Energiespeichers des zweiten Energiesystems und andererseits zum Überhitzen der im Strompfad vom ersten Energiesystem zum zweiten Energiesystem befindlichen elektronischen Komponenten führt.

Die Aufgabe der vorliegenden Erfindung liegt somit darin, das eingangs genannte Bordnetz bzw. die eingangs genannte Vorrichtung zur Steuerung des Stromflusses in einem Bordnetz so zu verbessern, dass die oben genannten Nachteile vermieden werden.

### Beschreibung der Erfindung:

Diese Aufgabe wird durch den unabhängigen Anspruch gelöst.

Vorteilhafte Ausgestaltungen sind Gegenstand der Unteransprüche.

Gemäß einem Aspekt der Erfindung wird eine Vorrichtung zur Steuerung eines Stromflusses in einem Bordnetz geschaffen, welche einen ersten, zweiten und dritten sowie vierten elektrischen Anschluss, einen ersten, zwischen dem ersten und dem zweiten Anschluss angeordneten, mit einer ersten, am vierten Anschluss anliegenden (bspw. von einer außerhalb der Vorrichtung befindlichen Spannungsquelle bereitgestellten) Steuerspannung steuerbaren, selbstsperrenden Schalter und einen zweiten, zwischen dem ersten und dem dritten Anschluss angeordneten, mit einer zweiten (bspw. ebenfalls von einer weiteren außerhalb der Vorrichtung befindlichen Spannungsquelle bereitgestellten) Steuerspannung steuerbaren Schalter aufweist.

In einem geschlossenen Zustand verbindet der erste Schalter den ersten Anschluss mit dem zweiten Anschluss elektrisch bzw. in einem geöffneten Zustand trennt dieser den ersten Anschluss von dem zweiten Anschluss elektrisch.

Analog verbindet der zweite Schalter in einem geschlossenen Zustand den ersten Anschluss mit dem dritten Anschluss elektrisch bzw. trennt in einem geöffneten Zustand den ersten Anschluss von dem dritten Anschluss elektrisch.

Ferner weist die Vorrichtung eine Steuereinrichtung zum Schließen des ersten Schalters bzw. zum Halten des ersten Schalters im geschlossenen Zustand auf, wenn die am vierten Anschluss der Vorrichtung anliegende Steuerspannung unter einen vorbestimmten zum Schließen bzw. zum Halten des ersten Schalters im geschlossenen Zustand minimal erforderlichen Spannungsschwellwert fällt, wobei der erste Schalter in dem durch die Steuereinrichtung gesteuert geschlossenen Zustand den ersten Anschluss mit dem zweiten Anschluss elektrisch verbindet (bzw. kurzschließt) und so einen potentiellen parasitären Stromfluss vom ersten Anschluss über den geöffneten zweiten Schalter zum dritten Anschluss verhindert.

Zudem weist die Vorrichtung ferner eine Notstromquelle zum Bereitstellen der zum Schließen des ersten Schalters bzw. zum Halten des ersten Schalters im geschlossenen Zustand erforderlichen Steuerspannung auf, mit der die Steuereinrichtung den ersten Schalter steuert und somit den ersten Schalter schließt bzw. im geschlossenen Zustand hält.

Dabei verbindet, bzw. kurzschließt der erste Schalter in dem durch die von der Notstromquelle bereitgestellte Spannung gesteuert geschlossenen Zustand den ersten Anschluss mit dem zweiten Anschluss elektrisch und so verhindert einen potentiellen parasitären Stromfluss vom ersten Anschluss über den zweiten geöffneten Schalter bis zum dritten Anschluss.

Die Steuereinrichtung schließt bzw. hält den ersten Schalter vorzugsweise abhängig von der Spannung der Notstromquelle und abhängig von abhängig von der am vierten Anschluss der Vorrichtung anliegenden Steuerspannung wahlweise mit der Spannung der Notstromquelle oder mit der von der am vierten Anschluss der Vorrichtung anliegenden Steuerspannung im geschlossenen Zustand.

Hierzu umfasst die Steuereinrichtung vorzugsweise:
- ein erstes, zwischen dem Steueranschluss des ersten Schalters und der Notstromquelle angeordnetes, zum Steueranschluss des ersten Schalters hin leitendes, und umgekehrt sperrendes, elektrisches Ventil,
- ein zweites, zwischen dem Steueranschluss des ersten Schalters und dem vierten Anschluss angeordnetes, zum Steueranschluss des ersten Schalters hin leitendes, und umgekehrt sperrendes, elektrisches Ventil,
- optional ein drittes, zwischen dem Steueranschluss des ersten Schalters und dem dritten Anschluss angeordnetes, zum Steueranschluss des ersten Schalters hin leitendes, und umgekehrt sperrendes, elektrisches Ventil.

Der Steueranschluss des ersten Schalters dient dazu, dass an dem die Steuerspannung zum gesteuerten Schließen und Öffnen des Schalters angelegt wird.

Zumindest eins der drei elektrischen Ventile ist vorzugsweise als kostengünstige und platzsparende Diode ausgebildet.

Die Notstromquelle ist vorteilhafterweise als ein wiederaufladbarer Akkumulator ausgeführt und wird von einer zwischen dem vierten Anschluss und der Notstromquelle befindliche erste Nachladeeinheit und/oder einer zwischen dem dritten Anschluss und der Notstromquelle angeordnete zweite Nachladeeinheit mit dem am vierten und/oder dritten Anschluss angelegten (von der außerhalb der Vorrichtung befindlichen Spannungsquelle bereitgestellten) Strom aufgeladen.

In einer weiteren bevorzugten Ausführungsform weist die Steuereinrichtung der erfindungsgemäßen Vorrichtung zwischen dem Steueranschluss des ersten Schalters und dem Massepotential einen dritten steuerbaren Schalter auf.

Ferner weist die Steuereinrichtung eine Steuereinheit zur Steuerung des dritten Schalters auf, wobei diese Steuereinheit aktuellen Stromwert am Strompfad vom ersten zum zweiten Anschluss erfasst, den aktuell erfassten Stromwert mit einem vorgegebenen Sollstromwert vergleicht, und bei Überschreiten des Sollstromwertes durch den aktuell erfassten Stromwert den dritten Schalter schließt und so die Steuerspannung des ersten Schalters auf Massepotential legt.

Gemäß einem weiteren Aspekt der vorliegenden Erfindung wird ein Fahrzeug, insb. ein Kraftfahrzeug, mit einer oben beschriebenen Vorrichtung. Vorteilhafte Ausgestaltungen des oben dargestellten Bordnetzes sind, soweit im Übrigen auf die oben beschriebene Vorrichtung bzw. auf das oben genannte Fahrzeug übertragbar, auch als vorteilhafte Ausgestaltungen der Vorrichtung bzw. des Fahrzeugs anzusehen.

### Kurze Beschreibung der Zeichnung:

Im Folgenden wird die Erfindung anhand eines Ausführungsbeispiels unter Zuhilfenahme von Figuren näher erläutert. Als Ausführungsbeispiel dient ein Bordnetz eines Hybridelektrofahrzeugs mit einer erfindungsgemäßen Vorrichtung. In den Figuren sind lediglich die Komponenten eines Bordnetzes darstellt, welche zur Beschreibung der Erfindung unerlässlich sind. Je nach Ausführung kann das Bordnetz bzw. die erfindungsgemäße Vorrichtung weitere Komponenten aufweisen, welche hier aber zur vereinfachten

Beschreibung der Erfindung nicht näher dargestellt werden. Dabei zeigen:
- Figur 1: ein Bordnetz eines Kraftfahrzeugs mit einer ersten erfindungsgemäßen Vorrichtung in einem Blockschaltbild,
- Figur 2: die Steuereinrichtung der ersten erfindungsgemäßen Vorrichtung in einem Blockschaltbild, und
- Figur 3: ein Bordnetz eines Kraftfahrzeugs mit einer zweiten erfindungsgemäßen Vorrichtung in einem Blockschaltbild,
- Figur 4: die Steuereinrichtung der zweiten erfindungsgemäßen Vorrichtung in einem Blockschaltbild, und
- Figur 5: die Nachladeeinrichtung der Notstromquelle der zweiten erfindungsgemäßen Vorrichtung in einem Blockschaltbild detailliert dargestellt.

### Detaillierte Beschreibung der Zeichnung:

Gemäß den Figuren umfasst ein Bordnetz eines Kraftfahrzeugs ein erstes und ein zweites Energiesystem Esys1, Esys2, sowie eine im negativen Strompfad des Bordnetzes angeordnete Vorrichtung V. Die Energiesysteme Esys1, Esys2 in diesem beispielhaften Bordnetz sind voneinander nicht potential getrennt, also sind zueinander potentialgebunden.

Die erfindungsgemäße Vorrichtung V kann aber auch in einem Bordnetz mit voneinander potential getrennten Energiesystemen Esys1, Esys2 angeordnet werden. Ebenso kann die Vorrichtung V nicht nur im negativen Strompfad des Bordnetzes, sondern auch im positiven Strompfad des Bordnetzes angeordnet werden.

Das erste Energiesystem Esys1 umfasst einen Generator G, einen Energiespeicher ES1 und eine Gruppe von Stromverbrauchern wie z. B Lampen oder Motorstarter, welche zusammengefasst Systemlast LA genannt werden.

Der vorzugsweise als Drehstrommaschine mit nachgeschalteter Gleichrichterschaltung ausgebildete Generator G dient als Energiewandler zum Umwandeln der kinetischen Energie vom Fahrzeug in die elektrische Energie und zugleich als Energiequelle zum Versorgen der Systemlast LA mit der elektrischen Energie.

Der Energiespeicher ES1, also der erste Energiespeicher im Bordnetz, speichert die vom Generator G umgewandelte elektrische Energie und versorgt die Systemlast LA mit der gespeicherten elektrischen Energie.

Das zweite Energiesystem Esys2 des Bordnetzes umfasst einen weiteren also zweiten Energiespeicher ES2 des Bordnetzes, welcher vorzugsweise als Doppelschichtkondensator ausgebildet ist und ebenfalls zum Versorgen der Systemlast LA mit der gespeicherten elektrischen Energie dient.

Die zwei Energiesysteme Esys1, Esys2 weisen unterschiedliche Nominalspannungen Vsys1, Vsys2 als Systemspannungen auf.

Der erste Energiespeicher ES1 mit bspw. einer oder mehreren 12V-Batterien oder Li-Zellen in einer Gruppenschaltung dient als Energie- bzw. Stromquelle für die Normalverbraucher der Systemlast LA wie z. B. Lichtmaschine. Der zweite Energiespeicher ES2 dient als Energie- bzw. Stromquelle für die für Hochstromverbraucher der Systemlast LA wie z. B. Motorstarter.

Die Steuerung des Stromflusses zwischen diesen beiden Energiesystemen wird von einer Vorrichtung V bzw. V' bewirkt.

Die Vorrichtung V, V' weist eine erste Nachladeeinrichtung NL1 auf, mit der die Vorrichtung V, V' den zweiten Energiespeicher ES2 mit der elektrischen Energie von dem ersten Energiespeicher ES1 bzw. dem Generator G auflädt. Bedarfsweise lädt die Vorrichtung V, V' auch den ersten Energiespeicher ES1 mit der elektrischen Energie vom zweiten Energiespeicher ES2 auf. Hierzu weist die Nachladeeinrichtung NL1 einen DC/DC-Wandler auf zur Umwandlung der Systemspannung Vsys1 des energiegebenden Energiesystems Esys1 in die Systemspannung Vsys2 des aktuell zu ladenden Energiespeichers Esys2, um den Energiespeicher Esys2 auf den gewünschten Ladezustand aufzuladen.

Zur Steuerung des Stromflusses von den beiden Energiespeichern ES1, ES2 zur Systemlast LA weist die Vorrichtung V, V' einen ersten und einen zweiten voneinander unabhängig steuerbaren Schalter S1, S2 auf, welche bspw. als selbstsperrende MOSFET ausgebildet sind und über eine am jeweiligen Gate-Anschluss GS angelegte Gatespannung gesteuert ein-/geöffnet werden. Die Einstellung der Gatespannung des jeweiligen Schalters S1, S2, somit die Ansteuerung des jeweiligen Schalters S1, S2 erfolgt über eine erste und eine zweite Steuereinrichtung SE1, SE1' bzw. SE2, welche ausgangsseitig mit den Gate-Anschlüssen des jeweiligen Schalters S1, S2 elektrisch verbunden sind.

Mit dem ersten Schalter S1 verbindet bzw. trennt die Vorrichtung V, V' den ersten Energiespeicher ES1 des ersten Energiesystems Esys1 mit der Systemlast LA elektrisch.

Um den ersten Energiespeicher ES1 mit der Systemlast LA elektrisch zu verbinden, schließt die Vorrichtung V, V' den ersten Schalter S1. Zur Trennung der elektrischen Verbindung zwischen dem ersten Energiespeicher ES1 und der Systemlast LA öffnet die Vorrichtung V, V' den ersten Schalter S1.

In einem nominalen Systemzustand im Bordnetz werden die Stromverbraucher LA im Bordnetz durch Schließen des ersten Schalters S1 von dem Generator G und dem ersten Energiespeicher ES1 des ersten Energiesystems Esys1 mit Strom versorgt. In diesem nominalen Zustand halten der Generator G und der erste Energiespeicher ES1 weitgehend im Bordnetz eine stabile Netzspannung aufrecht.

In einem nicht nominalen Systemzustand, wobei der Stromverbrauch durch Schließen eines oder mehrerer Hochstromverbraucher wie z. B. Motorstarter kurzfristig stark ansteigt, können der Generator G und der erste Energiespeicher ES1 allein eine stabile Netzspannung im Bordnetz nicht mehr weiter aufrecht halten.

In diesem nicht nominalen Zustand muss das zweite Energiesystem Esys2 mit dem zweiten Energiespeicher ES2 ins Bordnetz geschlossen bzw. eingespeist werden.

Dies geschieht durch bestimmtes Betätigen der beiden Schalter S1, S2 der Vorrichtung V, V'. Mit dem ersten und zweiten Schalter S1, S2 verbindet bzw. trennt die Vorrichtung das zweite Energiesystem Esys2 bzw. den zweiten Energiespeicher ES2 des zweiten Energiesystems Esys2 mit dem ersten Energiesystem Esys1 bzw. dem ersten Energiespeicher ES1 sowie der Systemlast LA des ersten Energiesystems Esys1 elektrisch.

Durch zeitgleiches Schließen des zweiten Schalters S2 und Öffnen des ersten Schalters S1 verbindet die Vorrichtung V, V' das zweite Energiesystem Esys2 bzw. den zweiten Energiespeicher ES2 des zweiten Energiesystems Esys2 mit dem ersten Energiesystem Esys1 bzw. dem ersten Energiespeicher ES1 sowie der Systemlast LA des ersten Energiesystems ES1 elektrisch und hält somit die Netzspannung im Bordnetz aufrecht.

Durch Öffnen des zweiten Schalters S2 trennt die Vorrichtung V das zweite Energiesystem Esys2 bzw. den zweiten Energiespeicher ES2 von dem ersten Energiesystem Esys1 bzw. von dem ersten Energiespeicher ES1 sowie der Systemlast LA.

Neben der ersten Nachladeeinrichtung NL1, den beiden Schaltern S1, S2 weist die Vorrichtung V, V' ferner eine Steuereinrichtung SE1, SE1' zum Steuern des ersten Schalters 1, einen wiederaufladbaren Akkumulator als Notstromquelle NQ, eine zweite Nachladeeinrichtung NL2, NL2' für die Notstromquelle NQ, eine Diagnoseeinrichtung DN zum Diagnostizieren der Funktionalität bzw. zur Überwachung des Ladezustandes der Notstromquelle NQ auf.

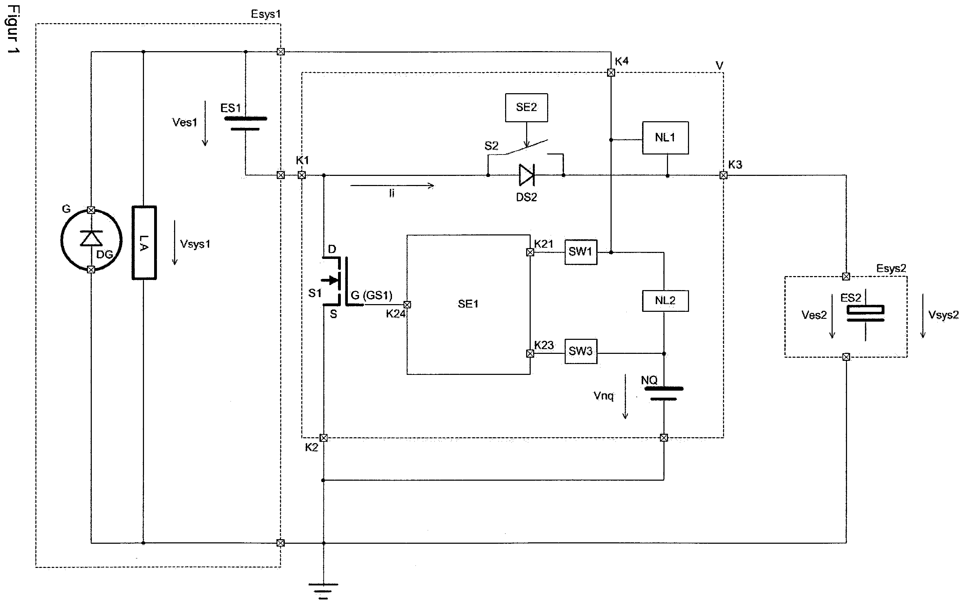

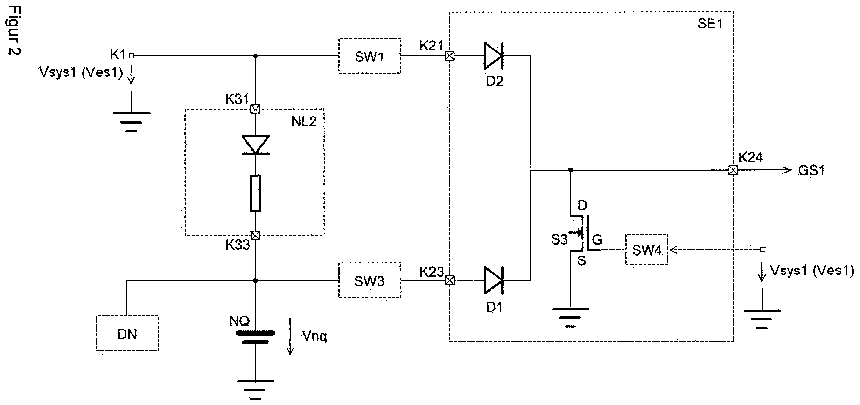

Ferner weist die Vorrichtung V des ersten Bordnetzes in den Figuren 1, 2 zwei Spannungsumwandlungseinrichtungen SW1, SW3 auf, mit denen die Vorrichtung V aus der Systemspannung Vsys1 des ersten Energiesystems Esys1 bzw. der Spannung Ves1 des ersten Energiespeichers ES1 sowie aus der Spannung Vnq der Notstromquelle NQ die Gatespannung Vgs1 zum Steuern des ersten Schalters S1 generiert.

Die zwei Spannungsumwandlungseinrichtungen SW1, SW3 können allesamt als DC/DC-Wandler gleichen Typs mit manuell und voneinander unabhängig einstellbaren Umwandlungskoeffizienten ausgebildet sein, aber auch als DC/DC-Wandler unterschiedlichen Typs mit unterschiedlichen Umwandlungskoeffizienten.

Die Steuerung des ersten MOSFET-Schalters S1 erfolgt durch die Steuereinrichtung SE1, welche als Ausgangssignal am Ausgang K24 der Einrichtung SE1 die Gatespannung Vgs1 für den Schalter S1 bereitstellt. Mit zwei Signaleingängen K21, K23 ist die Steuereinrichtung SE1 mit dem jeweiligen Ausgang der beiden Spannungsumwandlungseinrichtungen SW1, SW3 elektrisch verbunden, welche wiederum eingangsseitig mit dem jeweiligen positiven Anschluss des ersten Energiespeichers Esys1 und der Notstromquelle NQ elektrisch verbunden sind.

Die Spannungsumwandlung bei den beiden Spannungsumwandlungseinrichtungen SW1, SW3 erfolgt prozentual, also die Ausgangsspannung Ua verhält sich proportional zu der Eingangsspannung Ua, wobei die Verhältnisse der Ausgangsspannungen Ua zu den jeweiligen Eingangsspannungen Ue bei allen beiden Spannungsumwandlungseinrichtungen SW1, SW3 durch Einstellen der einstellbaren Umwandlungskoeffizienten k regelbar sind.

Die Ausgangsspannungen von den beiden Spannungsumwandlungseinrichtungen SW1, SW3 werden von der Steuereinrichtung SE1 an den Gate-Anschluss GS1 des ersten Schalters S1 weitergeleitet. Hierzu weist die Steuereinrichtung SE1 zwei Dioden D1, D2 auf, welche mit ihrem Anode-Anschluss mit dem jeweiligen Ausgang der Spannungsumwandlungseinrichtungen SW3, SW1 und mit ihrem Kathode-Anschluss mit dem Gate-Anschluss GS1 des ersten Schalters S1 elektrisch verbunden sind, und den Strom von den Ausgängen der jeweiligen Spannungsumwandlungseinrichtungen SW3, SW1 zum Gate-Anschluss GS1 des ersten Schalters S1 hin leiten und umgekehrt sperren.

Ferner weist die Steuereinrichtung SE1 zwischen dem Knoten K24 also zwischen dem Gate-Anschluss des ersten Schalters S1 und dem Massenpotential einen dritten steuerbaren, ebenfalls als selbstsperrender MOSFET ausgeführten Schalter S3 auf.

Der Gate-Anschluss dieses dritten Schalters S3 wird von einer zwischengeschalteten Steuereinheit SH gesteuert, wobei diese Steuereinheit SH den Stromfluss im Bordnetz (bspw. am ersten Schalter S1) überwacht und bei stark ansteigendem Stromfluss bzw. bei Überschreiten des Stromwertes im Bordnetz (bzw. am ersten Schalter S1) über einen vorgegebenen Sollstromwert den dritten Schalter S3 schließt und so die Gatespannung Vgs1 des ersten Schalters S1 auf den Massepotential legt. Solange aber der Bordnetzstrom unter den Sollstromwert liegt, hält die Steuereinheit SH den dritten Schalter S3 in einem geöffneten Zustand und die Gatespannung Vgs1 des ersten Schalters S1 auf das Spannungsniveau der Ausgangsspannung der Spannungsumwandlungseinrichtungen SW1, SW3.

In einem nominalen fehlerfreien Systemzustand im Bordnetz ist die Systemspannung Vsys1 des ersten Energiesystems ES1 bzw. die Spannung Ves1 am ersten Energiespeicher ES1 höher als oder gleich hoch wie eine für einen stabilen Systemzustand im Bordnetz erforderliche Mindestspannung (Nominalspannung).

In diesem Fall ist die Ausgangsspannung von der ersten Spannungsumwandlungseinrichtung SW1, welche unverändert von der ersten Diode D1 der Steuereinrichtung SE1 zum Gate-Anschluss GS1 weitergeleitet wird, höher als die zum Schließen des Schalters S1 erforderliche Soll-Gatespannung Vsgs1, sodass der erste Schalter S1 geschlossen wird bzw. im geschlossenen Zustand gehalten wird und den Strom vom ersten Energiespeicher ES1 zu der Systemlast LA leitet.

Da in diesem nominalen Systemzustand der Strom im Bordnetz unter den vorgegebenen Sollstromwert liegt und die Systemspannung Vsys1 des ersten Energiesystems oberhalb eines vorgegebenen Sollspannungswertes liegt, öffnet die Steuereinheit SH den dritten Schalter S3 bzw. hält den dritten Schalter S3 in einem geöffneten Zustand, sodass die Gatespannung Vgs1 des ersten Schalters S1 auf das Spannungsniveau der Ausgangsspannung der Spannungsumwandlungseinrichtung SW1 gehalten wird.

In diesem Systemzustand hält die zweite Steuereinrichtung SE2 den zweiten Schalter S2 im geöffneten Zustand.

In einem nicht-nominalen aber weiterhin fehlerfreien Systemzustand im Bordnetz steigt der Strom im ersten Energiesystem Esys1 steil an bzw. fällt die Systemspannung Vsys1 rapid ab.

Diese Veränderung des Stromes oder der Spannung wird von der Steuereinheit SH in der Steuereinrichtung SE1 erfasst. Die Steuereinheit SH setzt dann deren Ausgangsspannung auf ein zum Schließen des dritten Schalters S3 erforderliches Spannungsniveau und schließt so den dritten Schalter S3.

Demzufolge wird der Gate-Anschluss GS1 des ersten Schalters S1 auf den Massepotential gelegt. Folglich wird der erste Schalter S1 geöffnet und der Stromfluss vom ersten Energiespeicher ES1 durch diesen ersten Schalter S1 hin zur Systemlast LA unterbrochen.

Zeitgleich schließt die zweite Steuereinrichtung SE2 den zweiten Schalter S2 und verbindet so das zweite Energiesystem Esys2 bzw. den zweiten Energiespeicher ES2 mit dem ersten Energiesystem Esys1 bzw. mit dem ersten Energiespeicher ES1 und der Systemlast LA. So wird ein Strompfad vom ersten Energiespeicher ES1 über den zweiten Schalter S2 zum zweiten Energiespeicher ES2 und anschließend zur Systemlast LA hergestellt und die Netzspannung dank dem zweiten Energiespeicher ES2 auf einen zum Betreiben der Systemlast LA erforderlichen Spannungspotential gehalten.

Tritt im Bordnetz ein Systemfehler durch bspw. Verpolung des ersten Energiespeichers ES1 auf, so bricht die Systemspannung Vsys1 am ersten Energiesystem Esys1 bzw. die Spannung am ersten Energiespeicher ES1 unkontrolliert ab, ohne dabei ein Stromanstieg im Bordnetz verzeichnet wird. In diesem Fall fällt die Ausgangsspannung der ersten Spannungsumwandlungseinrichtung SW1 unter die Soll-Gatespannung Vsgs ab.

Folglich droht der erste Schalter S1 zu öffnen und der Stromfluss vom ersten Energiespeicher ES1 über diesen ersten Schalter S1 zur Systemlast LA unterbrochen zu werden.

Da jedoch kein rapid ansteigender Stromfluss erfasst wurde, schalten die zweite Steuereinrichtung SE2 und die Steuereinheit SH der ersten Steuereinrichtung SE1 den zweiten und dritten Schalter S2, S3 nicht ein.

Außerdem, weil die Steuereinheit SH von dem ersten Energiespeicher ES1 mit dem Strom versorgt wird, wird die Steuereinheit SH beim Abbrechen der Systemspannung beim ersten Energiespeicher ES1 aufgrund der fehlenden Betriebsspannung nicht mehr funktionieren. Demzufolge fällt die Steuerspannung also die Gatespannung für den dritten Schalter S3 aus und öffnet der als selbstsperrender MOSFET ausgebildete dritte Schalter S3 automatisch.

Durch den Abfall der Systemspannung Vsys1 fällt auch die Betriebsspannung an der zweiten Steuerungseinrichtung weg und somit auch die Gatespannung für den zweiten Schalter S2. Der als selbstsperrende MOSFET ausgebildete zweite Schalter S2 öffnet so automatisch. Dies ist gewünscht, damit das zweite Energiesystem Esys2 bzw. der zweite Energiespeicher ES2 nicht in das fehlerhafte Bordnetz angeschlossen wird.

Im fehlerhaften ersten Energiesystem Esys1 bspw. am Generator G entsteht jedoch eine parasitäre Strominjektion Ii, welche durch den MOSFET internen parasitären Diodenpfad DS2 des geöffneten zweiten Schalters S2 hindurch zum zweiten Energiesystem Esys2 hin unkontrolliert fließen und so einerseits zu Überhitzen des zweiten Schalters S2 und andererseits zu unkontrolliertem Überladen des zweiten Energiespeichers ES2 führen kann.

Diese Strominjektion Ii kann einfacherweise mithilfe vom Strompfad durch den geschlossenen ersten Schalter S1 zur Masse abgeführt und unschädlich gemacht werden.

Beim Ausbleiben der Spannung Ves1 in diesem fehlerhaften Systemzustand bleibt der als selbstsperrender MOSFET ausgeführte erste Schalter S1 jedoch dank der Notstromquelle NQ und dem Steuerpfad von der Notstromquelle über den zweiten Diode D3 in der Steuereinrichtung SE1 hin zum Gate-Anschluss des ersten Schalters S1 weiterhin geschlossen und leitet so die parasitäre Strominjektion Ii zur Masse ab.

Dies geschieht dadurch, dass die Notstromquelle NQ unabhängig vom Systemzustand Strom liefert und dank der nachgeschalteten Spannungsumwandlungseinrichtung SW3, welche die Spannung an der Notstromquelle NQ auf eine zum Schließen des ersten Schalters S1 erforderliche Gatespannung umwandelt bzw. erhöht, der erste Schalter S1 auch beim Ausbleiben der Spannung vom ersten Energiespeicher ES1 weiterhin von der Spannung der Notstromquelle NQ gesteuert geschlossen bzw. im geschlossenen Zustand gehalten wird.

Da beim Abbrechen der Systemspannung des ersten Energiesystems ES1 bzw. der Spannung am ersten Energiespeicher ES1 keine Spannung am Gate-Anschluss des dritten Schalters S3 anliegt, öffnet der selbstsperrende dritte Schalter S3 automatisch und somit wird der Gate-Anschluss des ersten Schalters S1 auch nicht mit der Masse kurzgeschlossen.

Dadurch wird der erste Schalter S1 beim Auftreten eines Systemfehlers beim ersten Energiesystem Esys1 geschlossen bzw. in einem geschlossenen Zustand gehalten und die parasitäre Strominjektion Ii vom ersten Energiesystem Esys1 durch diesen ersten Schalter S1 zur Masse abgeführt und unschädlich gemacht.

In der Folge daraus kann ein parasitärer Lade- oder Überladevorgang vom zweiten Energiespeicher ES2 und eine Systemüberhitzung am zweiten Schalter S2 bzw. innerhalb der Vorrichtung V verhindert werden. Ferner kann das gesamte Bordnetz trotz des Systemfehlers in einem Sicherheitszustand (Safe-State) gehalten werden.

Die Notstromquelle NQ kann von dem ersten Energiesystem Esys1 bzw. von dem ersten Energiespeicher ES1 des ersten Energiesystems Esys1 in einem nominalen fehlerfreien Systemzustand mit dem Strom aufgeladen werden. Der Ladezustand der Notstromquelle NQ bzw. der Ladevorgang bei der Notstromquelle NQ kann von der Diagnoseeinrichtung DN überwacht und geregelt werden.

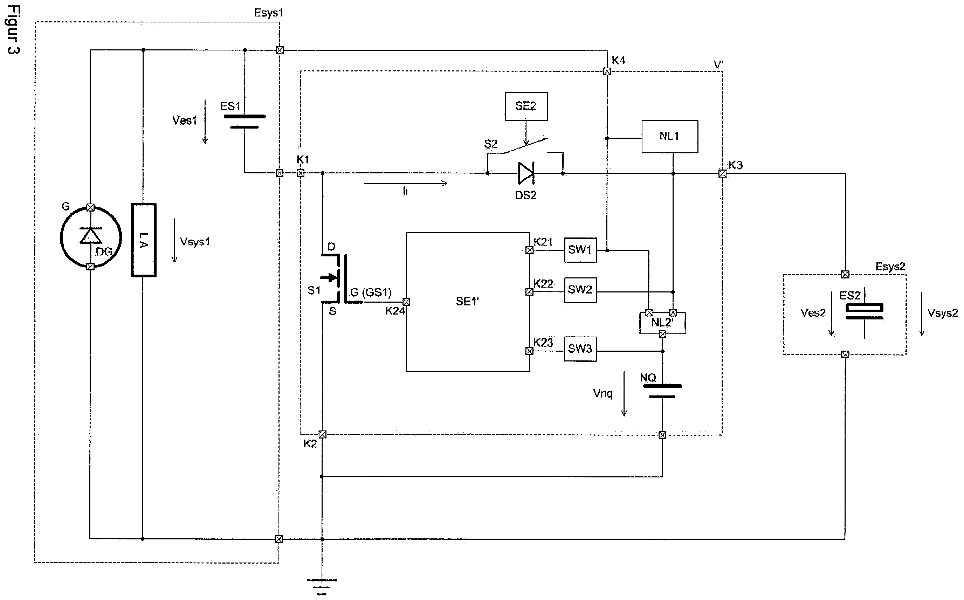

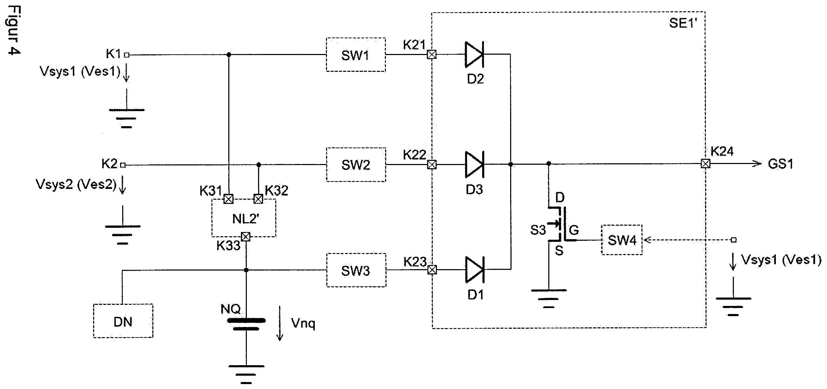

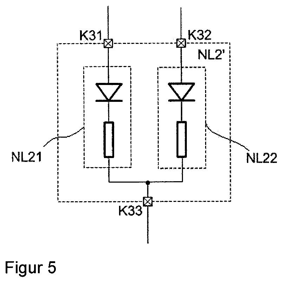

Die in den Figuren 3 bis 5 darstellte Vorrichtung V' unterscheidet sich von der in den Figuren 1 und 2 darstellten Vorrichtung V dadurch, dass der erste Schalter S1 neben der Spannung vom ersten Energiespeicher ES1 und der Spannung von der Notstromquelle NQ noch von der Spannung Vsys2 des zweiten Energiesystems Esys2 bzw. von der Spannung Ves2 des zweiten Energiespeichers ES2 gesteuert wird.

Hierzu weist die Vorrichtung V' eine weitere Spannungsumwandlungseinrichtung SW2 auf, welche die Spannung Vsys2 des zweiten Energiesystems Esys2 bzw. die Spannung Ves2 des zweiten Energiespeichers ES2 in einer Steuerspannung umwandelt. Diese umgewandelte Steuerspannung wird von einer weiteren Diode D3 an den Gate-Anschluss GS1 des ersten Schalters S1 weitergeleitet und steuert den ersten Schalter S1 als Gatespannung Vgs1.

So ist ein redundanter Steuerpfad für den ersten Schalter S1 geschaffen, welcher im fehlerhaften Zustand beim ersten Energiesystem Esys1 neben dem Steuerpfad von der Notstromquelle NQ auch zum Schließen bzw. Halten des ersten Schalters S1 im geschlossenen Zustand dient.

Die Notstromquelle NQ kann in diesem Fall sowohl von dem ersten als auch von dem zweiten Energiespeicher ES1, ES2 mit dem Strom aufgeladen werden. Hierzu weist die Nachladeeinrichtung NL2' jeweils einen Anschluss K31, K32 zu dem jeweiligen Energiespeicher ES1, ES2 auf. Zwischen dem jeweiligen Eingangsanschluss K31, K32 und dem Ausgangsanschluss K33 weist die Nachladeeinrichtung NL2' jeweils eine Diode und einen Widerstand umfassende Nachladeeinheit auf.

### Bezugszeichenliste

- Esys1, Esys2: Erstes, zweites Energiesystem
- ES1, ES2: Erster, zweiter Energiespeicher
- V, V': Erfindungsgemäße Vorrichtung
- G: Generator
- DG: Parasitäre Diode im Generator
- LA: Systemlast
- S1, S2, S3: Erster, zweiter, dritter Schalter
- DS2: Parasitärer Diodenpfad im zweiten Schalter S2
- NQ: Notstromquelle
- NL1, NL2, NL2': Nachladeeinrichtung
- DN: Diagnoseeinrichtung
- SW1, SW2, SW3, SW4: Spannungsumwandlungseinrichtung
- SE1, SE2: Steuereinrichtung
- SH: Steuereinheit
- D1, D2, D3: Diode, elektrisches Ventil
- K1, K2, K3, K4: Anschluss der Vorrichtung V, V'
- K21, K22, K23, K24: Anschluss der Steuereinrichtung SE1
- K31, K32, K33: Anschluss der Nachladeeinrichtung NL2'
- GS1: Gate-Anschluss des ersten Schalters S1

## Patentansprüche

1. Vorrichtung (V, V') zur Steuerung eines Stromflusses in einem Bordnetz, mit folgenden Merkmalen:
- einem ersten (K1), einem zweiten (K2) und einem dritten elektrischen Anschluss (K3),
- einem ersten, zwischen dem ersten und dem zweiten Anschluss (K1, K2) angeordneten, mit einer ersten, an einem vierten Anschluss (K4) der Vorrichtung (V, V') anliegenden Steuerspannung steuerbaren, selbstsperrenden Schalter (S1), wobei in einem geschlossenen Zustand des ersten Schalters (S1) der erste Anschluss (K1) mit dem zweiten Anschluss (K2) elektrisch verbindbar ist,
- einem zweiten, zwischen dem ersten und dem dritten Anschluss (K1, K3) angeordneten, mit einer zweiten Steuerspannung steuerbaren Schalter (S2), wobei in einem geschlossenen Zustand des zweiten Schalters (S2) der erste Anschluss (K1) mit dem dritten Anschluss (K3) elektrisch verbindbar ist,
- einer Notstromquelle (NQ) zum Bereitstellen der zum Schließen des ersten Schalters (S1) bzw. zum Halten des ersten Schalters (S1) im geschlossenen Zustand erforderlichen Spannung,
- einer Steuereinrichtung (SE1) zum Schließen des ersten Schalters (S1) bzw. zum Halten des ersten Schalters (S1) im geschlossenen Zustand mit der von der Notstromquelle (NQ) bereitgestellten Spannung beim Unterschreiten eines zum Schließen bzw. zum Halten des ersten Schalters (S1) im geschlossenen Zustand minimal erforderlichen Spannungsschwellwertes durch die am vierten Anschluss (K4) der Vorrichtung (V, V') anliegende Steuerspannung,
- wobei der erste Schalter (S1) in dem durch die Steuereinrichtung (SE1) gesteuert geschlossenen Zustand zum elektrischen Verbinden des ersten Anschlusses (K1) mit dem zweiten Anschluss (K2) und zum Verhindern eines potentiellen parasitären Stromflusses (Ii) vom ersten Anschluss (K1) über den geöffneten zweiten Schalter (S2) zum dritten Anschluss (K3) ausgeführt ist.

2. Vorrichtung (V, V') nach Anspruch 1, wobei die Steuereinrichtung (SE1) zum Schließen bzw. zum Halten des ersten Schalters (S1) im geschlossenen Zustand abhängig von der Spannung der Notstromquelle (NQ) und abhängig von der am vierten Anschluss (K4) oder am dritten Anschluss (K3) der Vorrichtung (V, V') anliegenden Steuerspannung wahlweise mit der Spannung der Notstromquelle (NQ) oder mit der am vierten Anschluss (K4) oder am dritten Anschluss (K3) der Vorrichtung (V, V') anliegenden Steuerspannung ausgeführt ist.

3. Vorrichtung (V, V') nach einem der Ansprüche 1 bis 2, wobei
- der erste Schalter (S1) einen Steueranschluss (GS1) für die Steuerspannung aufweist,
- die Steuereinrichtung (SE1)
∘ ein erstes, zwischen dem Steueranschluss (GS1) des ersten Schalters (S1) und der Notstromquelle (NQ) angeordnetes, zum Steueranschluss (GS1) des ersten Schalters (S1) hin leitendes, und umgekehrt sperrendes, elektrisches Ventil (D1), insb. eine Diode, und/oder
∘ ein zweites, zwischen dem Steueranschluss (GS1) des ersten Schalters (S1) und dem vierten Anschluss (K4) angeordnetes, zum Steueranschluss (GS1) des ersten Schalters (S1) hin leitendes, und umgekehrt sperrendes, elektrisches Ventil (D1), insb. eine Diode, und/oder
∘ ein drittes, zwischen dem Steueranschluss (GS1) des ersten Schalters (S1) und dem dritten Anschluss (K3) angeordnetes, zum Steueranschluss (GS1) des ersten Schalters (S1) hin leitendes, und umgekehrt sperrendes, elektrisches Ventil (D3), insb. eine Diode
aufweist.

4. Vorrichtung (V, V') nach einem der Ansprüche 1 bis 3, wobei
- die Notstromquelle (NQ) ein wiederaufladbarer Akkumulator ist, und
- die Vorrichtung (V, V') zwischen dem vierten (K4) und/oder dritten Anschluss (K3) und der Notstromquelle (NQ) eine erste (NL2, NL21) und/oder zweite Nachladeeinheit (NL22) zum Aufladen der Notstromquelle (NQ) mit dem am vierten (K4) und/oder dritten Anschluss (K3) angelegten Strom aufweist.

5. Vorrichtung (V, V') nach einem der Ansprüche 1 bis 4, wobei
- die Steuereinrichtung (SE1)
∘ zwischen dem Steueranschluss (GS1) des ersten Schalters (S1) und dem Massepotential einen dritten steuerbaren Schalter (S3),
∘ eine Steuereinheit (SH) zur Steuerung des dritten Schalters (S3)
aufweist,
- wobei diese Steuereinheit (SH)
∘ zum Erfassen eines aktuellen Stromwertes am Strompfad vom ersten zum zweiten Anschluss (K1, K2),
∘ zum Vergleichen des aktuell erfassten Stromwertes mit einem vorgegebenen Sollstromwert,
∘ zum Schließen des dritten Schalters (S3) bei Überschreiten des Sollstromwertes durch den aktuell erfassten Stromwert und zum Legen der Steuerspannung des ersten Schalters (S1) auf Massepotential
ausgeführt ist.

6. Fahrzeug, insb. Kraftfahrzeug, mit einer Vorrichtung (V, V') nach einem der Ansprüche 1 bis 5.

## Claims

1. Device (V, V') for controlling a current flow in an on-board system, said device comprising the following features:
- a first electrical connection (K1), a second electrical connection (K2) and a third electrical connection (K3),
- a first self-locking switch (S1) arranged between the first and the second connection (K1, K2) and controllable by means of a first control voltage applied to a fourth connection (K4) of the device (V, V'), wherein, in a closed state of the first switch (S1), the first connection (K1) is electrically connectable to the second connection (K2),
- a second switch (S2) arranged between the first and the third connection (K1, K3) and controllable by means of a second control voltage, wherein, in a closed state of the second switch (S2), the first connection (K1) is electrically connectable to the third connection (K3),
- an emergency power source (NQ) for providing the voltage necessary for closing the first switch (S1) or for holding the first switch (S1) in the closed state,
- a control arrangement (SE1) for closing the first switch (S1) or for holding the first switch (S1) in the closed state by means of the voltage provided by the emergency power source (NQ) when the control voltage applied to the fourth connection (K4) of the device (V, V') falls below a minimum voltage threshold value necessary to close the first switch (S1) or to hold the first switch (S1) in the closed state,
- wherein the first switch (S1), in the closed state controlled by the control arrangement (SE1), is configured to electrically connect the first connection (K1) to the second connection (K2) and to prevent a potential parasitic current flow (Ii) from the first connection (K1) via the open second switch (S2) to the third connection (K3).

2. Device (V, V') according to Claim 1, wherein the control arrangement (SE1) is configured to close the first switch (S1) or to hold the first switch (S1) in the closed state selectively by means of the voltage of the emergency power source (NQ) or by means of the control voltage applied to the fourth connection (K4) or to the third connection (K3) of the device (V, V'), in a manner dependent on the voltage of the emergency power source (NQ) and dependent on the control voltage applied to the fourth connection (K4) or to the third connection (K3) of the device (V, V').

3. Device (V, V') according to one of Claims 1 to 2, wherein
- the first switch (S1) comprises a control connection (GS1) for the control voltage,
- the control arrangement (SE1) comprises
∘ a first electric valve (D1), in particular a diode, arranged between the control connection (GS1) of the first switch (S1) and the emergency power source (NQ), and conductive towards the control connection (GS1) of the first switch (S1) and in the opposite direction blocking, and/or
∘ a second electric valve (D2), in particular a diode, arranged between the control connection (GS1) of the first switch (S1) and the fourth connection (K4), and conductive towards the control connection (GS1) of the first switch (S1) and in the opposite direction blocking, and/or
∘ a third electric valve (D3), in particular a diode, arranged between the control connection (GS1) of the first switch (S1) and the third connection (K3), and conductive towards the control connection (GS1) of the first switch (S1) and in the opposite direction
blocking.

4. Device (V, V') according to one of Claims 1 to 3, wherein
- the emergency power source (NQ) is a rechargeable accumulator, and
- the device (V, V'), between the fourth connection (K4) and/or third connection (K3) and the emergency power source (NQ), comprises a first recharging unit (NL2, NL21) and/or second recharging unit (NL22) for charging the emergency power source (NQ) with the power applied to the fourth connection (K4) and/or third connection (K3).

5. Device (V, V') according to one of Claims 1 to 4, wherein
- the control arrangement (SE1) comprises
∘ a third controllable switch (S3) between the control connection (GS1) of the first switch (S1) and the ground potential,
∘ a control unit (SH) for controlling the third switch (S3),
- wherein said control unit (SH) is configured
∘ to determine an effective current value at the current path from the first connection (K1) to the second connection (K2),
∘ to compare the effectively determined current value with a predefined target current value, and
∘ to close the third switch (S3) if the target current value is exceeded by the effectively determined current value and to connect the control voltage of the first switch (S1) to ground potential.

6. Vehicle, in particular motor vehicle, comprising a device (V, V') according to one of Claims 1 to 5.

## Revendications

1. Dispositif (V, V') de commande d'un flux de courant dans un réseau de bord, comprenant les caractéristiques suivantes :
- des première (K1), deuxième (K2) et troisième bornes électriques (K3),
- un premier commutateur à auto-verrouillage (S1) disposé entre les première et deuxième bornes (K1, K2) et pouvant être commandé par une première tension de commande appliquée à une quatrième borne (K4) du dispositif (V, V'), dans lequel, dans un état fermé du premier commutateur (S1), la première borne (K1) peut être reliée électriquement à la deuxième borne (K2),
- un deuxième commutateur (S2) disposé entre les première et troisième bornes (K1, K3) et pouvant être commandé par une deuxième tension de commande, dans lequel, dans un état fermé du deuxième commutateur (S2), la première borne (K1) peut être reliée électriquement à la troisième borne (K3),
- une source d'alimentation de secours (NQ) destinée à fournir la tension nécessaire pour fermer le premier commutateur (S1) ou pour maintenir le premier commutateur (S1) à l'état fermé,
- un dispositif de commande (SE1) pour fermer le premier commutateur (S1) ou pour maintenir le premier commutateur (S1) à l'état fermé avec la tension fournie par la source d'alimentation de secours (NQ) lorsque la tension s'abaisse en-dessous d'une valeur de seuil de tension minimale nécessaire pour fermer ou maintenir à l'état fermé le premier commutateur (S1) au moyen de la tension de commande appliquée à la quatrième borne (K4) du dispositif (V,V'),
- dans lequel le premier commutateur (S1), à l'état fermé commandé par le dispositif de commande (SE1), est conçu pour relier électriquement la première borne (K1) à la deuxième borne (K2) et pour empêcher le passage d'un courant parasite potentiel (Ii) de la première borne (K1), par l'intermédiaire du deuxième commutateur ouvert (S2), à la troisième borne (K3).

2. Dispositif (V, V') selon la revendication 1, dans lequel le dispositif de commande (SE1) est conçu pour fermer ou maintenir à l'état fermé le premier commutateur (S1) en fonction de la tension de l'alimentation de secours (NQ) et en fonction de la tension de commande appliquée à la quatrième borne (K4) ou à la troisième borne (K3) du dispositif (V, V'), soit avec la tension de l'alimentation de secours (NQ), soit avec la tension de commande appliquée à la quatrième borne (K4) ou à la troisième borne (K3) du dispositif (V, V').

3. Dispositif (V, V') selon l'une des revendications 1 et 2, dans lequel
- le premier commutateur (S1) comporte une borne de commande (GS1) pour la tension de commande,
- le dispositif de commande (SE1) comporte
∘ une première soupape électrique (D1), en particulier une diode, disposée entre la borne de commande (GS1) du premier commutateur (S1) et la source d'alimentation de secours (NQ), qui est passante vers la borne de commande (GS1) du premier commutateur (S1) et bloquante en sens inverse, et/ou
∘ une deuxième soupape électrique (D1), en particulier une diode, disposée entre la borne de commande (GS1) du premier commutateur (S1) et la quatrième borne (K4), qui est passante vers la borne de commande (GS1) du premier commutateur (S1) et bloquante en sens inverse, et/ou
∘ une troisième soupape électrique (D3), en particulier une diode, disposée entre la borne de commande (GS1) du premier commutateur (S1) et la troisième borne (K3), qui est passante vers la borne de commande (GS1) du premier commutateur (S1) et bloquante en sens inverse.

4. Dispositif (V, V') selon l'une des revendications 1 à 3, dans lequel
- la source d'alimentation de secours (NQ) est un accumulateur rechargeable, et
- le dispositif (V, V') comporte, entre la quatrième (K4) et/ou la troisième borne (K3) et la source d'alimentation de secours (NQ), une première (NL2, NL21) et/ou une deuxième unité de recharge (NL22) pour charger la source d'alimentation de secours (NQ) avec le courant appliqué à la quatrième (K4) et/ou à la troisième borne (K3).

5. Dispositif (V, V') selon l'une des revendications 1 à 4, dans lequel
- le moyen de commande (SE1) comporte
∘ entre la borne de commande (GS1) du premier commutateur (S1) et le potentiel de masse, un troisième commutateur commandable (S3),
∘ une unité de commande (SH) pour commander le troisième commutateur (S3),
- dans lequel ladite unité de commande (SH) est conçue
∘ pour détecter une valeur de courant actuelle sur le trajet de courant de la première à la deuxième borne (K1, K2),
∘ pour comparer la valeur de courant actuelle détectée à une valeur de courant de consigne prédéterminée,
∘ pour fermer le troisième commutateur (S3) lorsque la valeur de courant de consigne est dépassée par la valeur de courant détectée actuelle et pour faire passer la tension de commande du premier commutateur (S1) au potentiel de masse.

6. Véhicule,, en particulier véhicule automobile équipé d'un dispositif (V, V') selon l'une des revendications 1 à 5.
